# EUROPÄISCHE PATENTSCHRIFT

(11) **EP 2 510 315 B1**
(45) Veröffentlichungstag und Bekanntmachung des Hinweises auf die Patenterteilung: **28.02.2018**
(21) Anmeldenummer: 10765785.0
(22) Anmeldetag: 11.10.2010
(51) Int. Cl.: G01D 11/24, F16H 59/70, F16H 59/10, F16H 61/00, G01C 1/00, G01C 5/00, G01C 22/00

(54) **POSITIONSSENSOR**
POSITION SENSOR
CAPTEUR DE POSITION

(30) Priorität: 08.12.2009 DE 102009047621
(43) Veröffentlichungstag der Anmeldung: 17.10.2012
(73) Patentinhaber: Robert Bosch GmbH, 70442 Stuttgart (DE)
(72) Erfinder: GAERTNER, Stephan, 75181 Pforzheim (DE); HOFFMANN, Jens, 70376 Stuttgart (DE); KRAUSE, Norbert, 99817 Eisenach (DE); SEYED-KHOEI, Vahid, 70734 Stuttgart (DE); WEISHAEUTEL, Frank, 99869 Wangenheim (DE)
(86) Internationale Anmeldenummer: PCT/EP2010/065175
(87) Internationale Veröffentlichungsnummer: WO 2011/069712

(56) Entgegenhaltungen:
- DE-A1-102006 059 741
- DE-C1- 19 955 603

## Beschreibung

### Stand der Technik

DE 10 2006 059741 A1 bezieht sich auf einen modular ausgebildeten Sensorträgeraufbau. Der Sensorträgeraufbau umfasst mindestens ein Grundgehäuse und mindestens ein davon getrennt hergestelltes Sensorträgermodul. Das Sensorträgermodul ist aus vergusskompatiblem Material gefertigt und mechanisch auf dem Grundgehäuse des Sensorträgeraufbaus befestigbar.

Bei Anwendungen im Kraftfahrzeug, besonders bei Positionssensoren für eine Getriebesteuerung werden die Sensoren in Elektronikmodulen integriert verbaut. In automatischen Getrieben z.B. eingebaute Sensoren müssen für die dort vorherrschenden anspruchsvollen Betriebsbedingungen ausgelegt sein. Sie müssen Umgebungstemperaturen zwischen -40°C und + 150°C standhalten, ferner dem aggressiven Umgebungsmediumgetriebeöl (ATF = Automatic Transmission Fluid), hohen mechanischen Beanspruchungen bis zu 30g standhalten sowie metallischem Abrieb bzw. Partikelbildung im Getriebe widerstehen.

Die Medien- und Temperaturbeständigkeit wird in diesen Anwendungen durch eine ölresistente Verpackung der Elektronik sowie dem Einsatz von Hochtemperaturleiterplatten gewährleistet. Aufgrund komplexer Anforderungen aus unterschiedlichen Getriebetopologien sowie Bauraum- und Funktionsanforderungen kommen unterschiedliche physikalische Messprinzipien zum Einsatz. Eine lineare Positionserfassung kann z.B. auf Basis von Hall-Schaltern erfolgen. In diesem Zusammenhang werden vier digitale Hall-Schalter eingesetzt, die auf einer Leiterplatte derart angeordnet werden, dass sie die magnetische Codierung eines linear verschiebbaren multipolaren Dauermagneten erfassen. Ein Magnetschlitten ist mit dem linear betätigten Wählschieber, einem Hydraulikschieber in der Getriebesteuerplatte oder einem Parksperrenzylinder gekoppelt.

Neben den Hall-Schaltern befinden sich auf der Leiterplatte Widerstände zur Darstellung von Diagnosefunktionen und EMV-Kondensatoren.

Die Sensorelektronik ist durch einen dichten, ölresistenten Epoxidharz-Verguss vor den Einflüssen des Getriebeöls geschützt. Bei einem Automatikgetriebe mit manueller Schaltung, auch M-Schaltung genannt, erfasst der Positionssensor die Stellungen des Wählschiebers P, R, N, D, 4, 3, 2 sowie die Zwischenbereiche. Diese werden in Form eines 4-Bit-Codes an die Getriebesteuerung ausgegeben. Aus Sicherheitsgründen ist die Codierung der Positionsstellung einschrittig ausgeführt, d.h. es ist immer ein Bitwechsel bis zum Erkennen einer neuen Position erforderlich. Durch Fehlfunktion verursachte einfache Bitwechsel können vom Steuergerät mittels Plausibilitätsbetrachtung als falsch erkannt werden. Der Aufbau derartiger Positionssensoren für Getriebesteuerung ist aus der Publikation "Sensoren im Kraftfahrzeug", Robert Bosch GmbH, Ausgabe 2007, Fachwissen Kfz-Technik, Elektrik und Elektronik für Kfz, ISBN-10 3-7782-2031-4, Seiten 136-138 bekannt.

### Darstellung der Erfindung

Der erfindungsgemäß vorgeschlagenen Lösung folgend, wird anstelle eines zusätzlichen Bauteils, welches den Verlierschutz für den Magnetschlitten darstellt, die aus PA gefertigte Umspritzung als eben diese Verliersicherung ausgestaltet. Die PA-Umspritzung dient mithin sowohl als Abdichtung des Sensorpackages gegen das Getriebeöl (ATF = Automatic Transmission Fluid) als auch als Verlierschutz für den Magnetschlitten. Aufgrund der gewählten Werkstoffkombination, der Fertigung eines Führungsgehäuses aus PPS sowie der Herstellung der Packageabdichtung aus PA haftet ein Verliersicherungshaken, der aus PA gespritzt ist, nicht am aus PPS gefertigten Führungsgehäuse.

Mit der erfindungsgemäß vorgeschlagenen Ausgestaltung eines Positionssensors, der insbesondere in einem mit einem Getriebefluid (ATF = Automatic Transmission Fluid) vorgesehenen Fahrzeuggetriebe eingesetzt wird, kann bei der Getriebesteuerung die Anzahl der eingesetzten Bauteile sowie die Herstellkosten bzw. die erforderliche Herstellzeit erheblich reduziert werden. Der erfindungsgemäß vorgeschlagenen Lösung folgend wird durch eine PA-Umspritzung sowohl die elektrische Aufbau- und Verbindungstechnik in Form eines Stanzgitters oder einer Flexfolie oder auch miteinander vorumspritzter Leiterbahnen als auch die Positionierung eines Sensorpackages in seiner Lage fixiert. Des Weiteren wird durch die PA-Umspritzung eine elektrische Isolation voneinander gewährleistet, die insbesondere Kurzschlüsse durch Verunreinigungen im umgebenen Medium ausschließt. Dies ist bei dem ATF durchaus der Fall, da das Getriebefluid metallischen Abrieb von bewegten Bauteilen, so von Zahnrädern und Wellen, enthalten kann, die zu den obenstehend erwähnten Kurzschlüssen führen können. In dem Führungsgehäuse, welches am erfindungsgemäß vorgeschlagenen Positionssensor eingesetzt wird, lässt sich an der die Aufbau- und Verbindungstechnik überdeckenden PA-Umspritzung ein elastischer Rasthaken anformen. Dies ist bei einem aus Kunststoff im Wege des Spritzgussverfahrens hergestellten Führungsgehäuse des erfindungsgemäß vorgeschlagenen Positionssensors fertigungstechnisch äußerst einfach zu realisieren. Der Rasthaken ist integraler Bestandteil der PA-Umspritzung und stellt mithin kein gesondertes Bauteil dar, so dass dieses ebenfalls bei der Herstellung des erfindungsgemäß vorgeschlagenen Positionssensors in die Herstellkosten günstig beeinflussender Weise eingespart werden kann. Die Verliersicherung, die insbesondere als ein Rasthaken ausgebildet ist, begrenzt in besonders vorteilhafter Weise den lateralen Verfahrweg eines magnetischen Bauteils, so zum Beispiel eines magnetisierten oder magnetische Eigenschaften aufweisenden Magnetschlittens. Der Magnetschlitten ist an der der Aufbau- und Verbindungstechnik abgewandten Seite des Führungsgehäuses in Führungsschienen bzw. in Führungsrippen in seitliche Richtung verfahrbar geführt. Da die Verliersicherung, insbesondere der Rasthaken, eine Öffnung des Führungsgehäuses nach Montage der PA-Umspritzung durchsetzt, ragt der hakenförmige Vorsprung der Verliersicherung in die Bewegungsebene des magnetischen oder magnetisierten Bauteils und grenzt dessen seitlichen Verfahrweg.
In besonders vorteilhafter Weise kann durch die erfindungsgemäß vorgeschlagene Lösung im Führungsgehäuse eine fensterförmige Öffnung realisiert werden, die einerseits dem Sensorpackage, was stoffschlüssig mit der Aufbau- und Verbindungstechnik in Gestalt einer Stanzgitteranordnung und einer Leiterbahnanordnung ausgeführt ist, gegenüberliegt, und andererseits auf der anderen Seite des Führungsgehäuses die lateralen Verfahrbewegungen des insbesondere als Magnetschlitten ausgebildeten magnetischen Bauteils erfasst.

Bei einer Vorkonfektionierung, d.h. einem stoffschlüssigen Verfügung des Sensorpackages mit der Aufbau- und Verbindungstechnik in Gestalt einer vorumspritzten Stanzgitteranordnung oder in Gestalt vorumspritzter Leiterbahnen, wird diese vormontierte Baugruppe am Führungsgehäuse derart montiert, dass das Sensorpackage dem Fenster am Führungsgehäuse gegenüberliegt. Besonders einfach lässt sich die vormontierte Baugruppe aus Sensorpackage und Stanzgitteranordnung bzw. Leiterbahnenanordnung in das Führungsgehäuse einclipsen. Anschließend erfolgt die Ausführung der PA-Umspritzung, an der in vorteilhafter Weise aus Kunststoffmaterial gefertigte Einschnappelemente ausgebildet werden, die sich einfach werkzeuglos in entsprechend konfigurierte Öffnungen im Führungsgehäuse verkrallen, nachdem das Kunststoffmaterial ausgehärtet ist.

An punktförmigen Auflagen oder rippenförmig konfigurierten Positionierhilfen im Führungsgehäuse liegt das Sensorpackage in montiertem Zustand in einem wohl definierten Abstand in Bezug auf die fensterförmige Öffnung im Führungsgehäuse, auf dessen gegenüberliegender Seite der in laterale Richtung verfahrbare Magnetschlitten angeordnet ist.

Das Fenster am Führungsgehäuse begünstigt in vorteilhafter Weise die Minimierung des Luftspaltes zwischen dem Sensorpackage und dem Magnetschlitten. Die Umspritzung, die mit dem Führungsgehäuse über geeignet ausgebildete Öffnungen verclipst wird, dient nicht der Abdichtung des Sensorpackages gegen das Getriebefluid. Die PA-Umspritzung, die in montiertem Zustand am Führungsgehäuse des Positionssensors die Aufbau- und Verbindungstechnik in Gestalt vorumspritzter Stanzgitter bzw. vorumspritzter Leiterbahnen schützt, dient der Vermeidung von Kurzschlüssen durch im Getriebefluid vorhandene metallische Partikel. Die PA-Umspritzung dient des Weiteren der Lagefixierung des Sensorpackages im montierten Zustand sowohl bei auftretenden Temperaturschwankungen als auch bei im Betrieb eines Kraftfahrzeugs zwangsläufig auftretender Schüttelbeanspruchung.

Die Herstellung des erfindungsgemäß vorgeschlagenen Positionssensors erfolgt durch Fertigen des Sensorgehäuses 12 aus PPS, welches ein hochgenau herstellbarer, jedoch teuerer Werkstoff ist. Die Funktion des Sensorgehäuses liegt in der Aufnahme der übrigen Bauteile sowie in einer exakten Führung des Magnetes über die Lebensdauer. In das Sensorgehäuse aus PPS-Material werden eine vorumspritzte Stanzgitteranordnung sowie ein Sensorpackage eingeclipst. Das Sensorpackage wird in eine Öffnung 22 eingeclipst. Eine derart vormontierte Baugruppe wird in ein Spritzwerkzeug eingelegt und mit einem weiteren Kunststoffmaterial, bei dem es sich vorzugsweise um PA handelt, umspritzt. Während des Umspritzungsvorgangs der vormontierten Baugruppe entstehen Verkrallungselemente 54, wodurch die vorumspritzte Stanzgitteranordnung 50 sowie das vormontierte Sensorpackage 56 stoffschlüssig mit dem Führungsgehäuse verbunden werden. Gleichzeitig mit der Umspritzung entsteht mindestens ein hakenförmiger Vorsprung 44. In die derart fertig umspritzte Baugruppe wird der Magnetschlitten in seitliche Richtung verschiebbar montiert.

### Kurze Beschreibung der Zeichnung

Anhand der Zeichnung wird die Erfindung nachstehend eingehender beschrieben.

Es zeigt:
- Figur 1: ein Führungsgehäuse des erfindungsgemäß vorgeschlagenen Positionssensors mit Positionierhilfen für ein Sensorpackage sowie Öffnungen zur Verkrallung einer nachfolgend auszuführenden PA-Umspritzung des Führungsgehäuses,
- Figur 2: die gegenüberliegende Seite des in Figur 1 dargestellten Führungsgehäuses mit Führungsschienen bzw. an einer Führungsrippe aufgenommenem magnetischen Bauteil, hier ausgebildet als Führungsschlitten und bereits montierter elektrischer Aufbau- und Verbindungstechnik,
- Figur 3: die fertig umspritzte Baugruppe,
- Figur 4: ein Schnittverlauf gemäß dem in Figur 3 dargestellten Schnittverlauf IV - IV durch die montierte Anordnung aus Magnetschlitten, Führungsgehäuse und PA-Umspritzung gemäß Figur 3,
- Figur 5: die Vormontage von Sensorpackage und Stanzgitter bzw. vorumspritzter Leiterbahnanordnung und deren Positionierung gegenüber dem Fenster am Führungsgehäuse und
- Figur 6: eine Explosionsdarstellung der Komponenten des erfindungsgemäß vorgeschlagenen Sensors mit PA-Umspritzung, vormontiertem Stanzgitter mit Sensorpackage, Führungsgehäuse und von diesem noch separierten magnetischen Bauteil, hier insbesondere ausgebildet als Magnetschlitten.

### Ausführungsvarianten

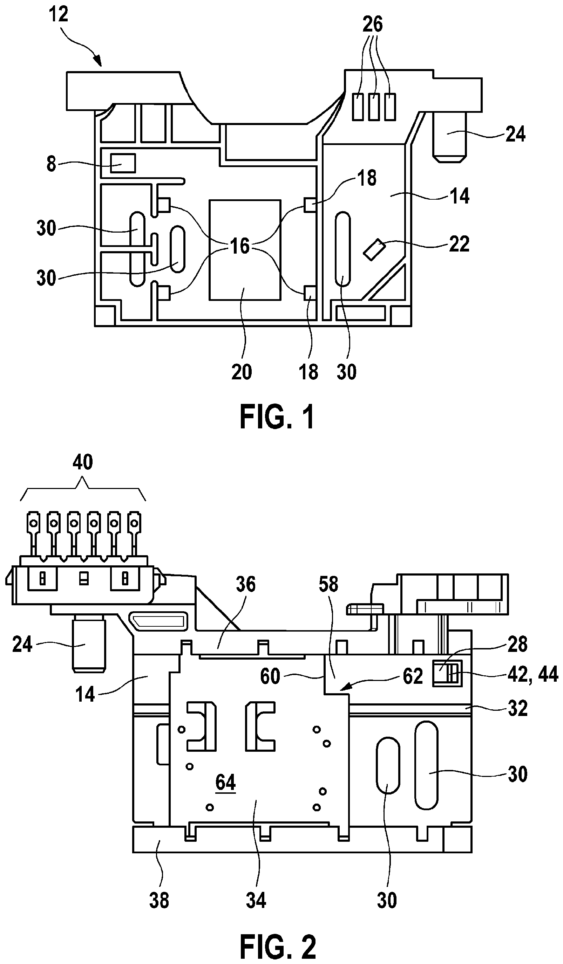

Der Darstellung gemäß Figur 1 ist zu entnehmen, dass ein Sensorgehäuse 12 eines Positionssensors als Führungsgehäuse 14 ausgebildet ist. Das Führungsgehäuse 14 wird aus Kunststoffmaterial hergestellt, so zum Beispiel PPS (GF + M) 65 oder PPS (GF + M) 55. Bei PPS handelt es sich um Polyphenylsulfid, was ein sehr teueres Kunststoffmaterial darstellt, mit sehr guten Eigenschaften insbesondere hinsichtlich seiner Formstabilität über die Lebensdauer. Eine PA-Umspritzung 58, wie weiter unten stehend erwähnt, stellt eine Umspritzung aus Polyamid dar, welches ein relativ günstiges Kunststoffmaterial darstellt.

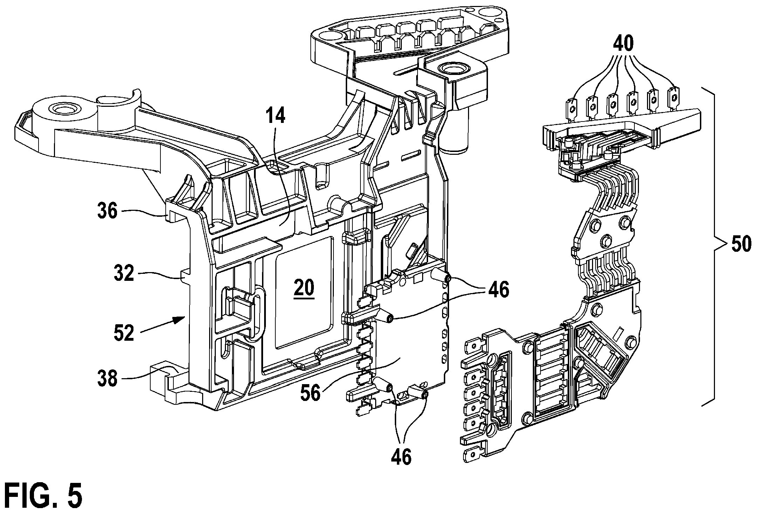

Aus der Darstellung gemäß Figur 1 geht hervor, dass das Führungsgehäuse 14 des Positionssensors eine Anzahl von fensterförmig ausgebildeten Öffnungen aufweist. Des Weiteren ist im Führungsgehäuse 14 ein Fenster 20 ausgebildet, innerhalb dessen sich im montierten Zustand des Positionssensors ein noch zu beschreibendes Sensorpackage 56 bzw. ein lateral zu diesem verschiebbares magnetisches Bauteil 34, insbesondere ausgebildet als Magnetschlitten 34, gegenüberliegen. Die Konfiguration des Fensters 20 im Führungsgehäuse 14 erlaubt die Minimierung des Abstandes zwischen dem Sensorpackage 56, vergleiche Figur 5, und dem Magnetschlitten, vergleiche Darstellung gemäß Figur 2.

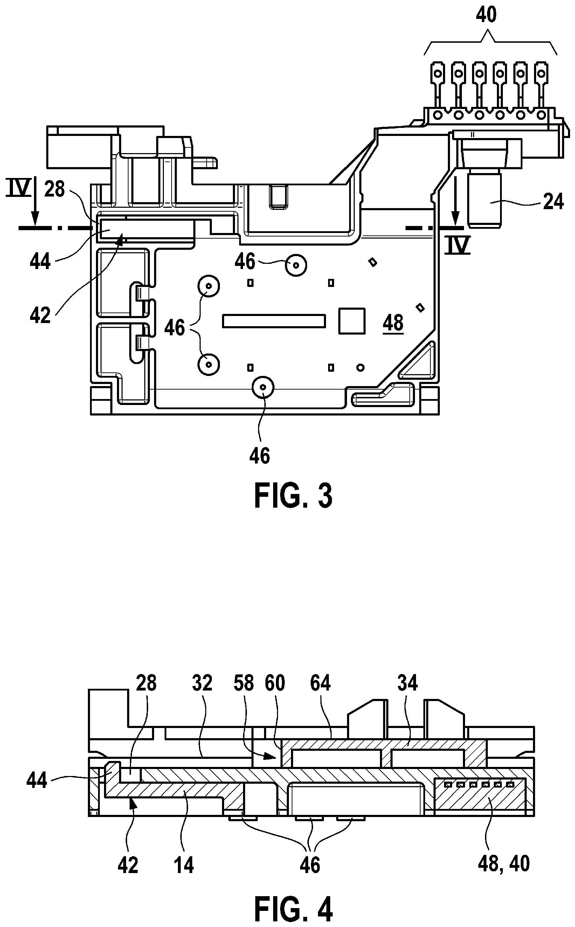

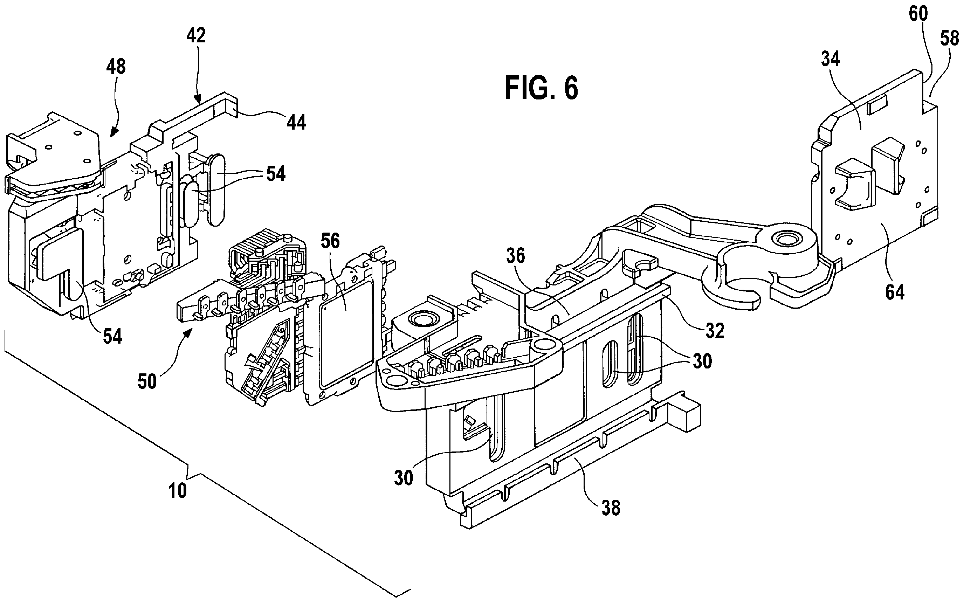

Im Führungsgehäuse 14 befinden sich Positionierelemente 16, die zum Beispiel als Rippe 18 ausgebildet sein können oder als punktförmige Auflagen, gegen welche das Sensorpackage 56, vergleiche Darstellung gemäß Figur 5, im montierten Zustand desselben anliegt. Neben dem bereits erwähnten Fenster 20, welches der Minimierung des Luftspaltes zwischen dem magnetischen Bauteil 34 und dem Sensorpackage 56 dient, umfasst das Gehäuse eine Anzahl von Befestigungsfenstern bzw. Befestigungsöffnungen 30. Dieses sind wie in der Darstellung gemäß Figur 1 schematisch angedeutet z. B. als Langlöcher beschaffen. Diese könnten auch ein quadratisches, rechteckiges oder pilzförmiges Aussehen haben und dienen dem Verkrallen einer Umspritzungsmasse beim Einspritzungsvorgang mit einer PA-Umspritzung 48 gemäß der Darstellung in den Figuren 3 bzw. 6. Des Weiteren befindet sich im Führungsgehäuse 14 des Sensorgehäuses 12 gemäß der Darstellung in Figur 1 ein Fenster 28. Dieses dient der Verwirklichung einer Verliersicherung, wie nachfolgend noch eingehender dargestellt werden wird. Das Führungsgehäuse 14 umfasst darüber hinaus eine Bundbuchse 24. Die Bundbuchse 24 positioniert das Sensorgehäuse 12. Die Bundbuchse 24 gewährleistet darüber hinaus eine Verschraubungsmöglichkeit des Sensorgehäuses 12, da sie ein Innengewinde umfassen kann. Des Weiteren befindet sich im Führungsgehäuse 14 ein Fenster 22. Dieses dient der Verrastung einer vormontierten Baugruppe, ein vorumspritztes Stanzgitter 50, vergleiche gemäß Figur 5 eine vorumspritzte Leiterbahnanordnung 40 oder eine andere Aufbau- und Verbindungstechnik umfassend. Am Fenster 22 kann eine vormontierte Baugruppe aus Aufbau- und Verbindungstechnik und Sensorpackage 56 verclipst werden, bevor eine in der Darstellung gemäß Figur 3 gezeigte PA-Umspritzung 48 hergestellt wird.

Figur 2 zeigt die fertige Baugruppe, das in Figur 1 in schematischer Weise dargestellte Führungsgehäuse von der gegenüberliegenden Seite aus.

Auf der in Figur 2 dargestellten Rückseite des Führungsgehäuses 14 befindet sich ein in laterale Richtung verfahrbares magnetisches oder magnetisierbares Bauelement 34. In der Ausführungsform gemäß Figur 2 ist dieses schlittenförmig ausgebildet und an einer Führungsrippe 32, die auf der Rückseite des Führungsgehäuses 14 angespritzt ist, lateral verfahrbar. Einander gegenüberliegende Enden des magnetischen Bauteils 34 sind in einer ersten Führungsschiene 36 bzw. einer zweiten Führungsschiene 38, die am Führungsgehäuse 14 ausgebildet sind, geführt. Das magnetische Bauteil 34 umfasst eine Ausnehmung 58, die von einer Anschlagfläche 60 an einer Seitenfläche 32 des magnetischen Bauteils 34 begrenzt ist. Die Anschlagfläche 60 wirkt mit einer Verliersicherung 42, 44 zusammen, welche bei fertig umspritzter PA-Umspritzung 48, vergleiche Figur 3, das im Führungsgehäuse 14 ausgebildete Fenster 28 für einen Rasthaken durchsetzt. Der in die Bewegungsebene des lateral bewegbaren magnetischen Bauteils 34 ragende Vorsprung 44 der Verliersicherung 42 begrenzt den seitlichen Verfahrweg des magnetischen Bauteils 34 am Führungsgehäuse 14. Aus der Darstellung gemäß Figur 2 erschließt sich zudem, dass an einem Ende des Führungsgehäuses 14 im montierten Zustand der Aufbau- und Verbindungstechnik in Gestalt vorumspritzter Leiterbahnen 40 bzw. einer vorumspritzten Stanzgitteranordnung 50 Leiterbahnenden zur Kontaktierung über eben jenes Führungsgehäuse 14 des Positionssensors hinausragen.

Figur 3 zeigt die Orientierung des Führungsgehäuses, jedoch mit eingelegtem Sensorpackage und eingeclipster PA-Umspritzung.

Figur 3 zeigt, dass die PA-Umspritzung 48 fertig am Führungsgehäuse 14 eingespritzt ist. Mit Bezugszeichen 46 sind Abstützungspunkte bezeichnet, an denen ein Sensorpackage 56 in einem wohl definierten Abstand in Bezug auf die Stanzgitteranordnung 50 bzw. die vorumspritzten Leiterbahnen 40 angeordnet ist, aufgenommen wird. Die PA-Umspritzung weist auf ihrer in Figur 3 nicht dargestellten, dem Führungsgehäuse 14 zuweisenden Seite, eine Anzahl von Einschnappelementen 54 auf, die am besten in der Explosionsdarstellung gemäß Figur 6 erkennbar sind. Aus Figur 3 geht hervor, dass an der PA-Umspritzung 48 eine Verliersicherung 42 in Gestalt des Rasthakens 44 ausgebildet ist, der im Fenster 28 der PA-Umspritzung 48 verkrallt ist und die im Zusammenhang mit Figur 2 bereits beschriebene Verliersicherung für das magnetische Bauteil bildet. Die Verkrallung entsteht durch Verfließen des PA-Kunststoffmaterials in die dafür vorgesehene fensterförmige Öffnung 28.

Der Darstellung gemäß Figur 3 ist zu entnehmen ein Schnittverlauf IV - IV zu entnehmen, der durch die Verliersicherung 42, das Führungsgehäuse 14 und die PA-Umspritzung 48 verläuft.

Figur 4 zeigt den Schnittverlauf IV - IV gemäß der Darstellung in Figur 3 durch die Baugruppe, das Führungsgehäuse 14, die PA-Umspritzung 48 und das magnetische Bauteil 34 umfassend. Aus der Darstellung gemäß Figur 4 geht hervor, dass im montierten Zustand der vorumspritzten Stanzgitteranordnung 40 bzw. der vorumspritzten Leiterbahnstruktur 40 und deren Umspritzung 48 mit PA die Verliersicherung 42 durch das Fenster 28 des Führungsgehäuse 14 ragt. Dadurch entsteht der hakenförmige Vorsprung 44 der Verliersicherung 42 vor und wirkt mit der Anschlagsfläche 60, welche die Ausnehmung 58 des magnetischen Bauteils 34 begrenzt, zusammen. Durch Anschlag der Anschlagfläche 60 am in die Bewegungsebene des magnetischen Bauteils 34 hineinragenden Vorsprungs 44 wird der in laterale Richtung entlang der Führungsrippe 32 verlaufende Verfahrweg des magnetischen, insbesondere schlittenförmig ausgebildeten Bauteils 34 begrenzt. Aus der Schnittdarstellung gemäß Figur 4 geht zudem hervor, dass aufgrund des verlängerten Arms der Verliersicherung 42 dieser eine Elastizität innewohnt, welche die Montage vereinfacht und die Funktionsfähigkeit begünstigt. Mit Bezugszeichen 46 sind die Abstützungspunkte 46 bezeichnet, mit welcher das Sensorpackage 56 gemäß der Explosionsdarstellung in Figur 5 mit der vorumspritzten Stanzgitteranordnung 50 bzw. der vorumspritzten Leiterbahnanordnung 40 stoffschlüssig verbunden ist.

Aus der Schnittdarstellung gemäß Figur 4 geht zudem hervor, dass im fertigen Zustand die vorumspritzte Leiterbahnstruktur 40 bzw. eine vorumspritzte Stanzgitteranordnung 50 durch die PA-Umspritzung 48 fixiert ist. Die PA-Umspritzung 48, welche die vormontierte Baugruppe aus Sensorpackage 56, vorumspritzter Stanzgitteranordnung 50 und/oder vorumspritzter Leiterbahnanordnung 40 fixiert und elektrisch isoliert, liegt flächig am Führungsgehäuse 14 an, auf dessen Rückseite entlang der Führungsrippe 32 das insbesondere schlittenförmig ausgebildete magnetische Bauteil 34 verfahrbar ist. Aus der Explosionsdarstellung gemäß Figur 5 geht hervor, dass eine vorumspritzte Stanzgitteranordnung 50 eine Anzahl von Leiterbahnen enthalten kann. Die Aufbau- und Verbindungstechnik kann anstelle einer vorumspritzten Stanzgitteranordnung auch eine Anzahl von Leiterbahnen 40 umfassen. Figur 5 zeigt, dass vor Montage der PA-Umspritzung 48, wie in Figur 3 dargestellt, das Sensorpackage 56 an den Abstützungspunkten 46 elektrisch mit der vorumspritzten Stanzgitteranordnung 50 bzw. einer vorumspritzten Leiterbahnstruktur 40 verbunden wird. Die Abstützungspunkte 46 werden durch zapfenförmig auf der Rückseite des Sensorpackages 56 hervorstehende Vorsprünge gebildet. Die Länge der zapfenförmigen Vorsprünge im Bereich der Abstützungspunkte 46 definiert den Abstand, den das Sensorpackage 46 im montierten Zustand durch das Fenster 20 mit dem gemäß Figur 4 auf der Rückseite des Führungsgehäuses 14 in laterale Richtung verfahrbaren magnetischen Bauteile 34 einnimmt. Dieser Luftspalt ist zu minimieren. Mit Bezugszeichen 52 ist in der Darstellung gemäß Figur 5 die Montagerichtung des magnetischen Bauteils 34 gemäß der Darstellung in Figur 4 an der Führungsrippe 32 bzw. den Führungsschienen 36 und 38 am Führungsgehäuse 14 des Positionssensors zu entnehmen.

Die Explosionsdarstellung gemäß Figur 6 zeigt den erfindungsgemäß vorgeschlagenen Positionsensor 10 in seinen einzelnen Baugruppen.

Der Darstellung gemäß Figur 6 ist das in Figur 5 ebenfalls in Explosionsdarstellung gezeigte Sensorpackage 56 zu entnehmen, welches stoffschlüssig mit der vorumspritzten Stanzgitteranordnung 50 bzw. einer vorumspritzten Leiterbahnstruktur 40 verbunden ist. Diese vormontierte Baugruppe wird zunächst mit dem Führungsgehäuse 14 verclipst. Das Verclipsen erfolgt durch Einführung eines Einschnappelementes in das in Figur 1 dargestellte Fenster 22 des Führungsgehäuses 14, so dass die vormontierte Baugruppe aus Sensorpackage 56, vorumspritzter Stanzgitteranordung 50 bzw. vorumspritzter Leiterbahnanordnung 40 am Führungsgehäuse 14 fixiert ist. Anschließend erfolgt die Überdeckung dieser Baugruppe durch die PA-Umspritzung 48. Aus der Explosionsdarstellung gemäß Figur 6 geht deutlich hervor, dass an der Innenseite der PA-Umspritzung 58 die Verkrallungselemente 54 in Pilzform als Hinterschnitt ausgebildet sind. Diese werden bei der Erzeugung der PA-Umspritzung 48 am Führungsgehäuse 14 durch verfließendes und danach aushärtendes PA-Material erzeugt. Bei der Erzeugung der PA-Umspritzung 48 wird das Sensorelement 56 mit seiner Vorderseite an die Positionierelemente 16, die als punktförmige Auflagen oder als Rippe 18 konfiguriert sein können, angedrückt. Bei der Montage der PA-Umspritzung 48 ragt der hakenförmige Vorsprung 44 der Verliersicherung 42 durch das entsprechende Fenster 28 des Führungsgehäuses 14. Anschließend erfolgt ein Einschieben des magnetischen Bauteils 34 in die untere Führungsschiene 38, die gegebenenfalls an der Rückseite des Führungsgehäuses 14 ausgebildete Führungsrippe 32 sowie gegebenenfalls in die Führungsschiene 36. Das magnetische Bauteil 34 umfasst eine Frontfläche 64, die bereits im Zusammenhang mit Figur 2 erwähnte Ausnehmung 58, die durch die Anschlagfläche 60 begrenzt wird, sowie die Seitenfläche 62, welche die Frontfläche 64 des magnetischen Bauteils 34 begrenzen.

Das Einschieben des magnetischen Bauteils 34 in die Führungsschienen 38 bzw. 36 bzw. die Führungsrippe 32 gestaltet sich besonders einfach, weil aufgrund der Anschrägung des rasthakenförmigen Vorsprungs 44 in Einschubrichtung dieser besonders leicht durch das in laterale Richtung bewegbare magnetische Bauteil 34 überfahren werden kann, jedoch in Gegenrichtung aufgrund des gerade verlaufenden hakenförmigen Vorsprungs 44 der Verliersicherung 42 die Anschlagfläche 60, die die Ausnehmung 58 begrenzt, an der geraden Seite des hakenförmigen Vorsprungs 44 der Verliersicherung 42 anschlägt. Dadurch ist das in laterale Richtung am Führungsgehäuse 14 bewegbare magnetische Bauteil 34 verliersicher, jedoch bewegbar aufgenommen.

## Patentansprüche

1. Positionssensor (10) für eine Getriebesteuerung, mit einem magnetischen Bauteil, mit einem mindestens eine Führungsschiene (36, 38) für das magnetische Bauteil (34) aufweisenden Führungsgehäuse (14), wobei das magnetische Bauteil (34) an einer Führungsrippe (32) des Führungsgehäuses (14) und in mindestens einer Führungsschiene (36, 38) am Führungsgehäuse (14) geführt ist, wobei am Führungsgehäuse (14) eine Stanzgitteranordnung (50) und/oder Leiterbahnen (40) elektrisch isolierende und fixierende Umspritzung (48) aufgenommen ist, **dadurch gekennzeichnet, dass**
die Umspritzung (48) eine Verliersicherung (42, 44) für das magnetische Bauteil (34) bildet, die Umspritzung (48) einen ein Fenster (28) im Führungsgehäuse (14) durchsetzenden hakenförmigen Vorsprung (44) aufweist, der eine gerade Seite und eine angeschrägte Seite aufweist, und der hakenförmige Vorsprung (44) der Verliersicherung (42) in die Bewegungsebene des magnetischen Bauteils (34) ragt und dessen lateralen Verfahrweg (52) begrenzt.

2. Positionssensor gemäß Anspruch 1, **dadurch gekennzeichnet, dass** das Führungsgehäuse (14) Öffnungen (30) aufweist, in welchen ein Kunststoffmaterial, insbesondere Polyamid, Verkrallungspunkte oder Verkrallungselemente (54) bildet.

3. Positionssensor gemäß Anspruch 1, **dadurch gekennzeichnet, dass** das Führungsgehäuse (14) ein Fenster (20) enthält, welches einem Sensorpackage (56) gegenüberliegt, welches elektrisch mit einer Stanzgitteranordnung (50) und/oder Leiterbahnen (40) verbunden ist.

4. Positionssensor gemäß Anspruch 1, **dadurch gekennzeichnet, dass** das Führungsgehäuse (14) eine Verrastung der Stanzgitteranordnung (50) und/oder der Leiterbahnstruktur (40) ermöglichende Öffnung (22) umfasst.

5. Positionssensor gemäß Anspruch 3, **dadurch gekennzeichnet, dass** das Führungsgehäuse (14) insbesondere als Rippen (18) ausgebildete Positionierelemente (16) für das Sensorpackage (56) umfasst.

6. Positionssensor gemäß Anspruch 1, **dadurch gekennzeichnet, dass** das magnetische Bauteil (34) eine Ausnehmung (58) umfasst, die von mindestens einer Anschlagfläche (60) begrenzt ist.

7. Verfahren zur Montage eines Positionssensors (10) für eine Getriebesteuereung nach einem der vorhergehenden Ansprüche mit einem Öffnungen (20, 22, 28, 30) aufweisenden Führungsgehäuse (14), mit nachfolgenden Verfahrensschritten:
a) dem stoffschlüssigen Fügen eines Sensorpackages (56) mit einer vorumspritzten Stanzgitteranordnung (50) oder einer vorumspritzten Leiterbahnstruktur (40) durch Ausbildung an Abstützungspunkten (46),
b) der Montage eines magnetischen Bauteils (34) in mindestens einer Führungsschiene (36, 38) und/oder Führungsrippen (32) am Führungsgehäuse (14),
c) dem Anformen durch Spritzprozess einer die vormontierte Baugruppe aus Sensorpackage (56), vorumspritzter Stanzgitteranordnung (50) und/oder vorumspritzter Leiterbahnstruktur (40) elektrisch isolierenden und fixierenden Umspritzung (48), deren Verkrallungspunkte (54) in Öffnungen (30) des Führungsgehäuses (14) ragen,
d) dem Einschnappen einer eine seitliche Verfahrbewegung (52) des magnetischen Bauteils (34) am Führungsgehäuse (14) begrenzenden Verliersicherung (42, 44) in eine fensterförmige Öffnung (28) des Führungsgehäuses (14).

## Claims

1. Position sensor (10) for a transmission control system, comprising a magnetic component, comprising at least one guide housing (14) having a guide rail (36, 38) for the magnetic component (34), the magnetic component (34) being guided on a guide rib (32) of the guide housing (14) and in at least one guide rail (36, 38) on the guide housing (14), an encapsulation (48) electrically insulating and fixing a leadframe arrangement (50) and/or conductor tracks (40) being accommodated on the guide housing (14), **characterized in that** the encapsulation (48) forms a retainer (42, 44) for the magnetic component (34), the encapsulation (48) has a hook-like protrusion (44) which passes through a window (28) in the guide housing (14) and has a straight side and an angled side, and the hook-like protrusion (44) of the retainer (42) projects into the movement plane of the magnetic component (34) and limits the lateral travel (52) of the latter.

2. Position sensor according to Claim 1, **characterized in that** the guide housing (14) has openings (30), in which a plastic material, in particular polyamide, forms interlocking points or interlocking elements (54).

3. Position sensor according to Claim 1, **characterized in that** the guide housing (14) contains a window (20) which is located opposite a sensor package (56) that is connected electrically to a leadframe arrangement (50) and/or conductor tracks (40).

4. Position sensor according to Claim 1, **characterized in that** the guide housing (14) comprises an opening (22) permitting the leadframe arrangement (50) and/or the conductor track structure (40) to be latched.

5. Position sensor according to Claim 3, **characterized in that** the guide housing (14) comprises positioning elements (16), in particular in the form of ribs (18), for the sensor package (56) .

6. Position sensor according to Claim 1, **characterized in that** the magnetic component (34) comprises a recess (58) which is delimited by at least one abutment surface (60).

7. Method for assembling a position sensor (10) for a transmission control system according to one of the preceding claims, comprising a guide housing (14) which has openings (20, 22, 28, 30), having the following method steps:
a) cohesively joining a sensor package (56) to a pre-encapsulated leadframe arrangement (50) or to a pre-encapsulated conductor track structure (40) by formation at support points (46),
b) installing a magnetic component (34) in at least one guide rail (36, 38) and/or guide ribs (32) on the guide housing (14),
c) moulding on, by means of an injection-moulding process, an encapsulation (48) which electrically insulates and fixes the preassembled group composed of sensor package (56), pre-encapsulated leadframe arrangement (50) and/or pre-encapsulated conductor track structure (40), the interlocking points (54) of which encapsulation project into openings (30) of the guide housing (14),
d) snapping a retainer (42, 44), which limits a lateral travelling movement (52) of the magnetic component (34) on the guide housing (14), into a window-like opening (28) of the guide housing (14) .

## Revendications

1. Capteur de position (10) destiné à une commande de transmission, comportant un composant magnétique, un boîtier de guidage (14) comportant au moins un rail de guidage (36, 38) destiné au composant magnétique (34), dans lequel le composant magnétique (34) est guidé sur une nervure de guidage (32) du boîtier de guidage (14) et dans au moins un rail de guidage (36, 38) sur le boîtier de guidage (14), dans lequel un système de grille estampée (50) et/ou une encapsulation (48) isolant électriquement et fixant des pistes conductrices (40) est/sont reçu (s) sur le boîtier de guidage (14), **caractérisé en ce que** l'encapsulation (48) forme un moyen de protection contre la perte (42, 44) pour le composant magnétique (34), **en ce que** l'encapsulation (48) présente une protubérance (44) en forme de crochet passant à travers une fenêtre (28) ménagée dans le boîtier de guidage (14), lequel crochet présente un côté droit et un côté biseauté, et **en ce que** la protubérance en forme de crochet (44) du moyen de protection contre la perte (42) fait saillie dans le plan de mouvement du composant magnétique (34) et délimite sa course de déplacement latérale (52).

2. Capteur de position selon la revendication 1, **caractérisé en ce que** le boîtier de guidage (14) présente des ouvertures (30) dans lesquelles une matière plastique, en particulier un polyamide, forme des points d'ancrage ou des éléments d'ancrage (54).

3. Capteur de position selon la revendication 1, **caractérisé en ce que** le boîtier de guidage (14) comporte une fenêtre (20) qui fait face à un boîtier de capteur (56) électriquement relié à un système de grille estampée (50) et/ou à des pistes conductrices (40) .

4. Capteur de position selon la revendication 1, **caractérisé en ce que** le boîtier de guidage (14) comprend une ouverture (22) permettant d'encliqueter le système de grille estampée (50) et/ou de la structure de pistes conductrices (40).

5. Capteur de position selon la revendication 3, **caractérisé en ce que** le boîtier de guidage (14) comprend des éléments de positionnement (16) destinés au boîtier de capteur (56) notamment réalisés sous la forme de nervures (18).

6. Capteur de position selon la revendication 1, **caractérisé en ce que** le composant magnétique (34) comprend une cavité (58) qui est délimitée par au moins une surface de butée (60).

7. Procédé de montage d'un capteur de position (10) destiné à une unité de commande de transmission selon l'une des revendications précédentes, comportant un boîtier de guidage (14) présentant des ouvertures (20, 22, 28, 30), comprenant les étapes de procédé consistant à :
a) joindre par complémentarité de matériau un boîtier de capteur (56) à un système de grille estampée (50) préencapsulée ou à une structure de pistes conductrices (40) préencapsulée par formation sur des points d'appui (46),
b) monter un composant magnétique (34) dans au moins un rail de guidage (36, 38) et/ou dans des nervures de guidage (32) sur le boîtier de guidage (14),
c) former par un processus de moulage par injection une encapsulation (48) isolant électriquement et fixant le module monté à l'avance constitué d'un boîtier de capteur (56) d'un système de grille estampée (50) préencapsulée et/ou d'une structure de pistes conductrices (40) préencapsulée, dont les points d'ancrage (54) font saillie dans des ouvertures (30) du boîtier de guidage (14),
d) fixer un moyen de protection contre la perte (42, 44) délimitant latéralement le mouvement de déplacement (52) du composant magnétique (34) sur le boîtier de guidage (14) dans une ouverture (28) en forme de fenêtre du boîtier de guidage (14).
